# EUROPEAN PATENT APPLICATION

(11) **EP 4 699 890 A1**
(43) Date of publication of application: **25.02.2026**
(21) Application number: 24791681.0
(22) Date of filing: 17.01.2024
(51) Int. Cl.: B61F 5/52

(54) **BOGIE AND RAIL VEHICLE**

(30) Priority: 17.04.2023 CN 202310411692
(71) Applicant: CRRC QINGDAO SIFANG CO., LTD., Chengyang District Qingdao Shandong 266111 (CN)
(72) Inventor: ZHANG, Xiongfei, Qingdao, Shandong 266111 (CN); ZHANG, Zhenxian, Qingdao, Shandong 266111 (CN); WANG, Shi, Qingdao, Shandong 266111 (CN); SONG, Xupeng, Qingdao, Shandong 266111 (CN); JIANG, Xin, Qingdao, Shandong 266111 (CN)
(74) Representative: Prinz & Partner mbB
(86) International application number: PCT/CN2024/072668
(87) International publication number: WO 2024/217093

(57) **Abstract**

A bogie, comprising a frame. The frame comprises a frame body (1) and a mounting base (2). The frame body (1) is made of a composite material. Part of the mounting base (2) is a composite material mounting base (2a), and part of the mounting base (2) is a metal material mounting base (2b). The composite material frame body (1) and the composite material mounting base (2a) are connected by means of threaded fasteners (5), and are electrically conductive at mounting positions of the threaded fasteners (5). The composite material frame body (1) and the metal material mounting base (2b) are connected by means of the threaded fasteners (5), are riveted by means of riveting members (4), are bonded by means of a structural adhesive, are insulated at the mounting positions of the threaded fasteners (5), and are electrically conductive at mounting positions of the riveting members (4). A railway vehicle comprises said bogie. In this way, the present application has the advantages of light weight, high strength, stable and reliable electric conduction, and the like.

## Description

The present application claims the priority to Chinese Patent Application No. 202310411692.8, titled "BOGIE AND RAIL VEHICLE", filed with the China National Intellectual Property Administration on April 17, 2023, the entire disclosure of which is incorporated herein by reference.

### FIELD

The present application relates to the technical field of rail vehicles, and in particular, to a bogie for rail vehicles.

### BACKGROUND

The weight of a whole bogie accounts for over 40% of the total weight of a rail vehicle. Therefore, it is critical to reduce the weight of the bogie for energy conservation and energy consumption reduction for rail vehicles.

While reducing the weight of the bogie, it is necessary to consider properties such as the strength performance and the electrical conductivity of the bogie. A technical issue to be addressed by those skilled in the art is to reduce the weight of the bogie without affecting the above properties.

### SUMMARY

In order to address the above technical issue, a bogie is provided according to the present application. The bogie includes a frame, the frame includes a frame body and mounting seats, the frame body is a composite frame body, the mounting seats include a composite mounting seat and a metallic mounting seat, the composite frame body and the composite mounting seat are connected via a threaded fastener; and the composite frame body and the metallic mounting seat are connected via a threaded fastener, are riveted via a rivet member, and are bonded with a structural adhesive.

In one embodiment, an annular gap formed between a peripheral surface of the rivet member and a riveting hole is filled with a conductive medium.

In one embodiment, multiple rivet members are connected to the same metallic mounting seat, for some or all of the multiple rivets, the annular gap formed between the peripheral surface of the rivet member and the riveting hole is filled with the conductive medium.

In one embodiment, the structural adhesive is provided at least between mounting faces of the composite frame body and the metallic mounting seat connected via the rivet member, and both ends of each of the rivet members are in close contact with the composite frame body and the metallic mounting seat, to make the annular gap a sealed space.

In one embodiment, for the rivet member and the threaded fastener connected to the same metallic mounting seat, an included angle formed between an axis of the rivet member and an axis of the threaded fastener ranges from 45 degrees to 90 degrees.

In one embodiment, the threaded fastener for the composite frame body and the composite mounting seat is in a mounting configuration as follows: two metal inserts are embedded in the composite frame body and the composite mounting seat respectively, the threaded fastener is connected to the two metal inserts, and an electric potential difference between each of the two metal inserts and the threaded fastener is less than a predetermined value.

In one embodiment, the threaded fastener for the composite frame body and the metallic mounting seat is in a mounting configuration as follows: a metallic connector is connected to the composite frame body, the threaded fastener is connected to the metallic connector, and an insulating layer is provided between the metallic connector and the composite frame body.

In one embodiment, the metallic connector includes a large-diameter portion and a small-diameter portion, where the small-diameter portion is mounted in a hole formed in the composite frame body, an anti-rotation groove is formed in the large-diameter portion, and a nut for mating with the threaded fastener is clamped in the anti-rotation groove.

In one embodiment, a metallic junction is provided on the composite frame body, and current from conductive parts of the frame is directed to the metallic junction.

Additionally, a rail vehicle including a bogie described in any of the above solutions is provided according to the present application.

The bogie according to the present application has advantages such as light weight, high strength, and stable and reliable electrical conductivity.

### BRIEF DESCRIPTION OF THE DRAWINGS

FIG. 1 is a schematic view showing the overall structural of a frame of a bogie of a rail vehicle according to the present application;
FIG. 2 is a schematic view showing connection between a composite frame body and a metallic mounting seat;
FIG. 3 is a cross-sectional view showing a mounting position for a rivet member;
FIG. 4 is a cross-sectional view showing a mounting position for a threaded fastener for connecting a composite frame body and a composite mounting seat; and
FIG. 5 is a cross-sectional view showing a mounting position for a threaded fastener for connecting the composite frame body and a metallic mounting seat.

Reference numerals are as follows:

| | | | |
|---|---|---|---|
| 1 | frame body, | 2 | mounting seat, |
| 2a | composite mounting seat, | 2b | metallic mounting seat, |
| 3 | metallic junction, | 4 | rivet member, |
| 5 | threaded fastener, | 6 | conductive medium, |
| 7 | anti-loosening washer, | 8 | metal insert, |
| 9 | metallic connector, | 9a | large-diameter portion, |
| 9b | small-diameter portion, | 9c | anti-rotation groove, |
| 10 | nut, | 11 | structural adhesive, |
| 12 | insulating layer. | | |

### DETAILED DESCRIPTION OF THE EMBODIMENTS

For those skilled in the art to better understand technical solutions of the present application, the present application will be further described in detail in conjunction with drawings and embodiments hereinafter.

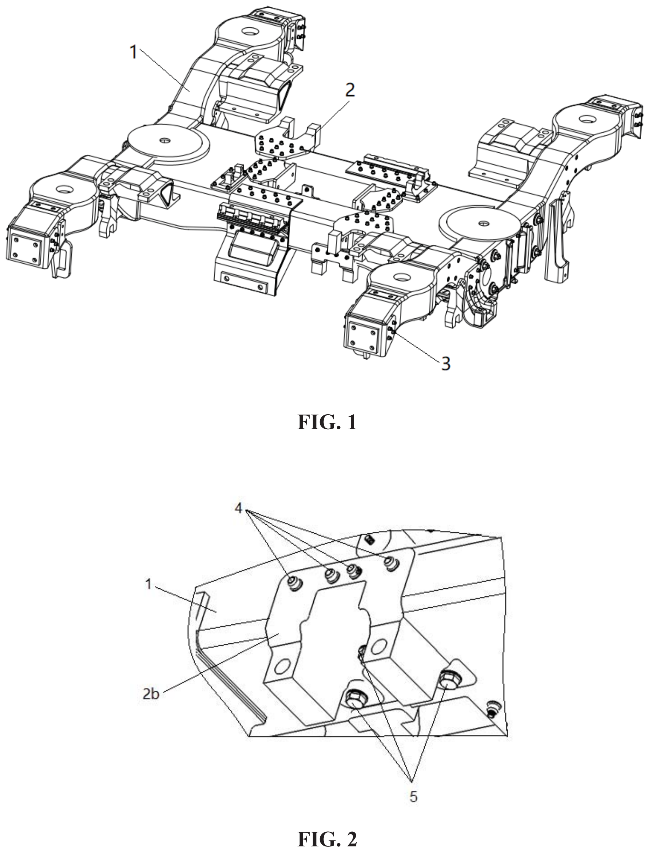

As shown in FIG. 1, a frame of a bogie frame includes a frame body 1 and multiple mounting seats 2 connected to the frame body 1.

The frame body 1 mainly includes a cross beam and a side sill. In the embodiment illustrated in the figure, the frame body 1 mainly includes one cross beam and two side sills, forming an H-shaped structure.

The mounting seats 2 are configured for mounting other components on the bogie, and generally include seats for mounting a brake hanger, an anti-roll bar, a locating swing arm, a current collector, a fuse box, a lateral stop, a lateral damper, a traction rod, etc.

The frame body 1 is made of a composite material, and the mounting seats 2 include a composite mounting seat made of a composite material and a metallic mounting seat made of a metal material. Such combination of materials effectively reduces the weight of the frame while maintaining its strength. Specifically, the composite material may be carbon fiber-reinforced composite material, and the metal material may be low-alloy steel, stainless steel, titanium alloy, etc.

One or more metallic junctions 3 may be provided on the composite frame body 1. As shown in FIG. 1, the metallic junction 3 is provided at an end of the side sill. Current at conductive parts of the frame can be directed to and led out from the metallic junction 3, enabling electricity such as return current and static electricity to be reliably led out of the frame, and thereby guaranteeing safety during use. Specifically, current from the conductive parts may be directed to the metallic junction 3 through the inherent conductivity of the metallic components of the conductive parts, or may be directed to the metallic junction 3 through connected wires, copper strips, etc.

As shown in FIG. 2, the composite frame body 1 and the metallic mounting seat 2b are connected via a threaded fastener 5, are riveted via a rivet member 4, and are bonded with a structural adhesive 11. Such combination of connection manners can guarantee the strength of the connection between two components made of different materials.

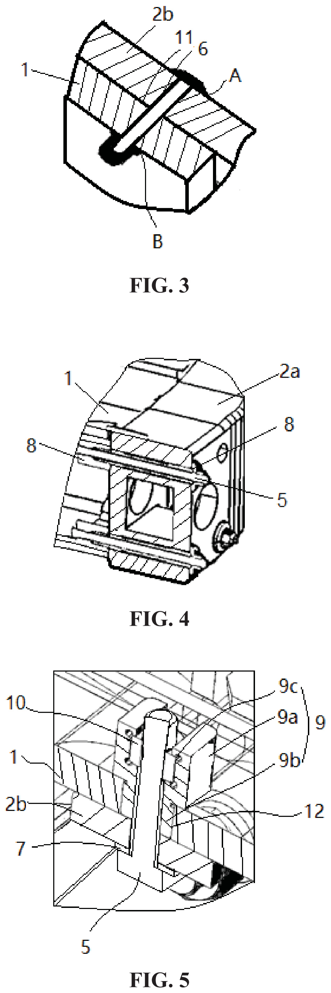

As shown in FIG. 3, by appropriately providing the matching dimensions of the rivet member 4 and a riveting hole, an annular gap is formed between a peripheral surface of the rivet member 4 and the riveting hole. The annular gap is filled with a conductive medium 6, which may be conductive grease, conductive paste, etc. For convenience of illustration, such arrangement is referred to as an electrically-conductive arrangement.

Carbon fiber strands inside the composite material would be exposed when the riveting hole is drilled in the composite frame body 1. The carbon fiber filaments have good electrical conductivity. With the above electrically-conductive arrangement, the carbon fiber filaments conduct electricity through the conductive medium 6 to the rivet member 4 made of metal, which further conducts the electricity to the metallic mounting seat 2b, thereby realizing good electrical conductivity between the composite frame body 1 and the metallic mounting seat 2b.

Typically, the composite material includes a surface made of resin, which results in poor electrical conductivity of the composite material, and thus electrical conduction cannot be effectively established when the composite material is connected to a metallic component. The above electrically-conductive arrangement effectively resolves this issue, enabling equipotential grounding connection between the composite component and the metallic component.

When multiple rivet members 4 are connected to a single metallic mounting seat 2b (e.g., four rivets 4 are connected to the metallic mounting seat as shown in FIG. 2), the solution may be that only one or several of the rivet members 4 employs the above electrically-conductive arrangement, while the remaining rivet members 4 are in a conventional arrangement. Of course, theoretically, the rivet members 4 connected to the same metallic mounting seat 2b may all employ the above electrically-conductive arrangement.

As shown in FIG. 3, the structural adhesive 11 is provided at least between mounting faces of the composite frame body 1 and the metallic mounting seat 2b connected via the rivet member 4, and both ends (ends A and B shown in FIG. 3) of each of the rivet members 4 are in close contact with the riveted components. In this way, the annular gap between the rivet member 4 and the riveting hole becomes a sealed space, so as to prevent the leakage of the conductive medium 6 filled in the annular gap and delay the oxidation failure of the conductive medium 6, thereby guaranteeing the stability of electrical conductivity. Additionally, the structural adhesive 11 provided as described above effectively limits a radial displacement of the rivet member 4 with respect to the riveting hole, so that the annular gap filled with the conductive medium 6 can be kept stable, thereby facilitating the stability of the electrically conductivity.

As shown in FIG. 2, for the rivet member 4 and the threaded fastener 5 connected to the same metallic mounting seat 2b, an included angle formed between an axis of the rivet member 4 and an axis of the threaded fastener 5 preferably ranges from 45 degrees to 90 degrees. That is, the rivet member 4 and the threaded fastener 5 are respectively mounted on two mounting faces of the same metallic mounting seat 2b that form an included angle of 45 degrees to 90 degrees. In this way, the rivet member 4 is subjected to a reduced shear force due to its exploited axial tensile and compressive capabilities, and the displacement of the rivet member 4 with respect to the riveting hole can be limited, thereby further enhancing the stability of electrical conductivity.

As shown in FIG. 4, the threaded fastener 5 for the composite frame body 1 and a composite mounting seat 2a is in a mounting configuration as follows: two metal inserts 8 are embedded in the composite frame body 1 and the composite mounting seat 2a respectively, the threaded fastener 5 is connected to the two metal inserts 8, and an electric potential difference between each of the two metal inserts 8 and the threaded fastener 5 is less than a predetermined value. Specifically, both the metal inserts 8 and the threaded fastener 5 may be made of a high-potential metal material, such as stainless steel or titanium alloy.

With such mounting configuration, the composite frame body 1 and the composite mounting seat 2a are electrically conducted to each other at mounting position of the threaded fastener 5, enhancing the reliability of electrical conductivity of the entire frame.

As shown in FIG. 5, the threaded fastener 5 for the composite frame body 1 and the metallic mounting seat 2b is in a mounting configuration as follows: a metallic connector 9 is connected to the composite frame body 1, the threaded fastener 5 is connected to the metallic connector 9, and an insulating layer 12 is provided between the metallic connector 9 and the composite frame body 1.

Specifically, as shown in FIG. 5, the threaded fastener 5 is a bolt. A central through hole is formed in the metallic connector 9, and the metallic connector 9 has a large-diameter portion 9a and a small-diameter portion 9b provided in sequence in an axial direction. An anti-rotation groove 9c is formed in the large-diameter portion 9a of the metallic connector 9. A nut 10 is clamped in the anti-rotation groove 9c, to prevent loosening. The small-diameter portion 9b of the metallic connector 9 is mounted in a hole formed in the composite frame body 1, with an insulating layer 12 provided between the small-diameter portion 9b and this hole. The bolt passes through a hole in the metallic mounting seat 2b and the small-diameter portion 9b of the metallic connector 9 in sequence, and extends into the large-diameter portion 9a of the metallic connector 9 to be secured to the nut 10. An anti-loosening washer 7 is provided between a head portion of the bolt and the metallic mounting seat 2b. By selecting appropriate materials, an electric potential difference among the anti-loosening washer 7, the bolt, the nut 10, the metallic connector 9, and the metallic mounting seat 2b is limited to be less than a predetermined value. For example, when the metallic mounting seat 2b is made of low-alloy steel, the anti-loosening washer 7, the bolt, the nut 10, and the metallic connector 9 may be made of low-alloy steel as well.

With such mounting configuration, the composite frame body 1 and the metallic mounting seat 2b, which are connected to each other, are insulated from each other at the mounting position of the threaded fastener 5, avoiding a large potential difference leading to electrochemical corrosion between two components made of different materials. The composite frame body 1 and the metallic mounting seat 2b, which are connected to each other, are made electrically continuous by the above electrically-conductive arrangement at riveting positions.

In the embodiment as shown in the figures according to the present application, the composite frame body 1 and the composite mounting seat 2a are connected via the threaded fastener 5, and electrical continuity is realized at the mounting position of the threaded fastener 5. The composite frame body 1 and the metallic mounting seat 2b are connected via the threaded fastener 5, and are riveted and bonded, and the composite frame body 1 and the metallic mounting seat 2b are insulated from each other at the mounting position of the threaded fastener 5, and electrical continuity is realized at the riveting position.

The principle and the embodiments of the present application are illustrated herein by specific examples. The above description of examples is only intended to help the understanding of the method and the idea of the present application. It should be noted that, for those skilled in the art, a few of modifications and improvements may be made to the present application without departing from the principle of the present application, and these modifications and improvements are also deemed to fall into the scope of the present application defined by the claims.

## Claims

1. A bogie comprising a frame, the frame comprising a frame body (1) and mounting seats (2), wherein the frame body (1) is a composite frame body, the mounting seats (2) comprise a composite mounting seat (2a) and a metallic mounting seat (2b), and wherein
the composite frame body (1) and the composite mounting seat (2a) are connected via a threaded fastener (5), and
the composite frame body (1) and the metallic mounting seat (2b) are connected via a threaded fastener (5), are riveted via a rivet member (4), and are bonded with a structural adhesive (11).

2. The bogie according to claim 1, wherein an annular gap formed between a peripheral surface of the rivet member (4) and a riveting hole (4) is filled with a conductive medium (6).

3. The bogie according to claim 2, wherein the number of the rivet member connected to the same metallic mounting seat (2b) is plural, for some or all of the plurality of rivet members (4), the annular gap formed between the peripheral surface of the rivet member (4) and the riveting hole is filled with the conductive medium (6).

4. The bogie according to claim 3, wherein
the structural adhesive (11) is provided at least between mounting faces of the composite frame body (1) and the metallic mounting seat (2b) connected via the rivet members (4), and
both ends of each of the rivet members (4) are in close contact with the composite frame body (1) and the metallic mounting seat (2b), to make the annular gap a sealed space.

5. The bogie according to claim 1, wherein for the rivet member (4) and the threaded fastener (5) connected to the same metallic mounting seat (2b), an included angle formed between an axis of the rivet member (4) and an axis of the threaded fastener (5) ranges from 45 degrees to 90 degrees.

6. The bogie according to any one of claims 1 to 5, wherein the threaded fastener (5) for the composite frame body (1) and the composite mounting seat (2a) is in a mounting configuration as follows: two metal inserts (8) are embedded in the composite frame body (1) and the composite mounting seat (2a) respectively, the threaded fastener (5) is connected to the two metal inserts (8), and an electric potential difference between each of the two metal inserts (8) and the threaded fastener (5) is less than a predetermined value.

7. The bogie according to any one of claims 1 to 5, wherein the threaded fastener (5) for the composite frame body (1) and the metallic mounting seat (2b) is in a mounting configuration as follows: a metallic connector (9) is connected to the composite frame body (1), the threaded fastener (5) is connected to the metallic connector (9), and an insulating layer (12) is provided between the metallic connector (9) and the composite frame body (1).

8. The bogie according to claim 7, wherein the metallic connector (9) comprises a large-diameter portion (9a) and a small-diameter portion (9b), and wherein the small-diameter portion (9b) is mounted in a hole formed in the composite frame body, an anti-rotation groove (9c) is formed in the large-diameter portion (9a), and a nut (10) for mating with the threaded fastener (5) is clamped in the anti-rotation groove (9c).

9. The bogie according to any one of claims 1 to 5, wherein a metallic junction (3) is provided on the composite frame body, and current from conductive parts of the frame is directed to the metallic junction (3).

10. A rail vehicle comprising the bogie according to any one of claims 1 to 9.
